(19) Europäisches Patentamt / European Patent Office / Office européen des brevets

(11) **EP 1 495 795 B1**

(12) **FASCICULE DE BREVET EUROPEEN**

(45) Date de publication et mention
de la délivrance du brevet:
**05.06.2013 Bulletin 2013/23**

(51) Int Cl.:
***B01D 53/86*** *(2006.01)*  ***C01B 17/04*** *(2006.01)*
***B01J 23/745*** *(2006.01)*

(21) Numéro de dépôt: **04291577.7**

(22) Date de dépôt: **22.06.2004**

(54) **Procédé d'élimination de composés soufrés d'un gaz par oxydation directe**

Verfahren zur Entfernung von Schwefelverbindungen aus einem Gas durch Direktoxidation

Process of eliminating sulphur compounds from a gas by direct oxidation

(84) Etats contractants désignés:
**AT BE BG CH CY CZ DE DK EE ES FI FR GB GR
HU IE IT LI LU MC NL PL PT RO SE SI SK TR**

(30) Priorité: **11.07.2003 FR 0308560**

(43) Date de publication de la demande:
**12.01.2005 Bulletin 2005/02**

(73) Titulaire: **Institut Français du Pétrole
92852 Rueil-Malmaison Cedex (FR)**

(72) Inventeurs:
• **Chapat, Jean-François
30340 Salindres (FR)**
• **Nedez, Christophe
30340 Salindres (FR)**
• **Ray, Jean-Louis
92200 Neuilly Sur Seine (FR)**

(56) Documents cités:
**EP-A- 0 324 091    WO-A-94/21555
FR-A- 2 538 716    FR-A- 2 540 092
US-A- 4 478 800**

**Description**

La présente invention concerne un procédé de traitement des gaz, notamment des effluents gazeux industriels, contenant des composés soufrés, en vue de la transformation catalytique de ces composés en produits pouvant être facilement et proprement éliminés. Elle concerne plus particulièrement un procédé d'oxydation directe de composés soufrés tels que l'hydrogène sulfuré $H_2S$, le COS et le $CS_2$ en soufre $S_x$ et/ou en sulfates.

Un procédé standard de désulfuration de gaz issus en particulier du gaz naturel ou du pétrole, industriellement utilisé, est le procédé Claus. Après séparation par une absorption conduite avec des amines, un traitement thermique est conduit sur le gaz dit acide obtenu, en présence d'un appoint d'air, à une température en général comprise entre 900 et 1300°C. La réaction (1) est menée à bien de telle manière à viser, en sortie de ce traitement, un ratio molaire de 2 entre $H_2S$ et $SO_2$.

$$H_2S + 3/2\,O_2 \;\rightarrow\; H_2O + SO_2 \qquad (1)$$

Dans le même temps, environ 70% des composés soufrés sont transformés en soufre élémentaire $S_x$. En outre, il est connu que la présence, dans les gaz à traiter, d'hydrocarbures et de $CO_2$ conduit à la formation de sous-produits tels que COS et $CS_2$, non transformables par la réaction de Claus (2) et qui réduisent le taux final de conversion du soufre.

Au cours d'une deuxième étape, catalytique celle-ci, il s'agira de continuer la transformation en soufre de l'ensemble des composés soufrés présents, selon la réaction dite Claus (2) comme des réactions d'hydrolyse (3) et (4), au sein de réacteurs placés en cascade, au nombre en général de 2 ou de 3.

$$2\,H_2S + SO_2 \;\rightarrow\; 3/x\,S_x + 2\,H_2O \qquad (2)$$

$$CS_2 + 2\,H_2O \;\rightarrow\; CO_2 + 2\,H_2S \qquad (3)$$

$$COS + H_2O \;\rightarrow\; CO_2 + H_2S \qquad (4)$$

Un moindre rejet d'effluents toxiques sera ainsi directement lié à la mise en oeuvre de catalyseur(s) efficace (s) de conversion de l'$H_2S$, du COS et du $CS_2$. La réaction de Claus est généralement mise en oeuvre dans des réacteurs successifs à des températures décroissantes et supérieures à 200°C.

Suivant le nombre de réacteurs utilisés, en sortie de l'unité Claus et après séparation du soufre $S_x$ on obtient généralement un effluent gazeux comprenant entre environ 2% et environ 5% de $H_2S$ en volume et jusqu'à 1 ou 2 % volume de $CS_2$ et COS.

Plusieurs procédés et méthodes ont été proposées pour aller plus loin dans les niveaux de récupération du soufre et de purification des effluents issus de la désulfuration, afin de limiter au mieux toute émission polluante dans l'atmosphère, en particulier de $H_2S$, COS et $CS_2$.

Le brevet français FR 2 538 716 propose par exemple de mettre en oeuvre une zone de réaction finale dans lequel un catalyseur comprenant un métal est utilisé en présence d'oxygène et à une température comprise entre 200°C et 300°C pour continuer la réaction de Claus et pour obtenir un effluent purifié.

La demande de brevet WO 94/ 21555 décrit un procédé d'élimination d'hydrogène sulfuré contenu en une concentration inférieure à 5% volume dans un gaz mettant en oeuvre un catalyseur dont la phase active est constituée d'un oxyde ou d'un sel métallique. Au contraire de la présente demande, cette demande ne divulgue pas les avantages inattendus liés à l'utilisation spécifique du fer dans la phase active.

Le brevet EP 0 324 091 décrit un procédé dans lequel une masse contenant comme phase active du fer est utilisé pour l'élimination d'hydrogène sulfuré et dans lequel ladite masse est régénérée. Ce brevet ne divulgue pas les avantages inattendus liés à l'emploi des proportions en fer utilisés comme phase active selon la présente demande.

Selon le présent procédé, une oxydation directe des composés soufrés tels que $H_2S$, COS et $CS_2$ contenus dans les effluents gazeux issu par exemple d'un procédé Claus est réalisée, afin d'en transformer une majeure partie, voire la totalité, en soufre élémentaire et/ou en sulfates. L'oxydation est mise en oeuvre en présence d'un gaz comprenant de l'oxygène, le plus souvent de l'oxygène pur, à une température inférieure à la température de rosée du soufre, c'est à dire inférieure à 200°C. L'intérêt de travailler à une telle température est, d'une part, de pouvoir récupérer le soufre sous forme liquide et/ou solide dans la porosité du catalyseur et, d'autre part, de déplacer l'équilibre thermodynamique de la réaction dans le sens favorable à la formation du soufre.

Dans le présent procédé, au contraire des procédés connus mettant en oeuvre la réaction de Claus, on cherche par ailleurs à effectuer une oxydation directe de l'hydrogène sulfuré en soufre, en minimisant la formation simultanée de dioxyde de soufre qui cause finalement une perte dans le rendement d'épuration des gaz.

Selon la présente invention, on met en oeuvre un catalyseur favorisant la transformation de l'$H_2S$ en soufre $S_x$, c'est à dire présentant une forte activité, en minimisant toutefois l'oxydation du $H_2S$ en $SO_2$, c'est à dire de sélectivité élevée.

Plus précisément, la présente invention se rapporte à un procédé d'oxydation directe en soufre et/ou en sulfate de composés soufrés généralement contenus en une quantité inférieure à 10% en volume dans un gaz typiquement issu d'une unité Claus, selon la revendication 1.

La teneur en élément fer du catalyseur selon l'invention est comprise entre 2% et 5% en poids, de préférence entre 2 et 4,9%, voire entre 2 et 4,8% et encore avantageusement comprise entre 2,5 et 5% en poids.

Ledit catalyseur présente une phase active à base de fer qui peut se présenter sous forme d'au moins un oxyde ou un sel de fer, ce dernier pouvant être choisi, par exemple, parmi le nitrate, le sulfate, le chlorure de fer, sans que cette liste puisse être considérée comme limitative.

Selon l'invention le catalyseur précédemment décrit est utilisé pour l'oxydation directe des composés soufrés tels que $H_2S$, COS, $CS_2$ en soufre élémentaire. Le plus souvent, les gaz traités comprennent jusqu'à 5% en volume d'hydrogène sulfuré H2S et quelquefois en outre jusqu'à 2% en volume de COS et/ou de CS2.

Cette utilisation permet notamment de traiter des effluents contenant des quantités d'$H_2S$ inférieures à 5% en volume, et même à 2% en volume.

Le catalyseur, utilisé selon l'invention pour l'oxydation directe des composés soufrés en soufre et/ou sulfates à une température entre 100°C et 170°C, comporte une phase active comprenant du fer et un support à base de dioxyde de titane, de zircone, de silice, de silice-alumine ou d'alumine présentant une surface spécifique d'au moins 20 $m^2$/g et un volume poreux total d'au moins 0,3 $cm^3$/g. Préférentiellement, le support du catalyseur selon l'invention est à base d'alumine, de silice ou de silice-alumine.

L'alumine, la silice ou la silice-alumine présentent une surface spécifique BET d'au moins 20 $m^2$/g, de préférence d'au moins 40 $m^2$/g. Le volume poreux total (VPT) d'un tel support sera alors d'au moins 0,3 $cm^3$/g, de préférence d'au moins 0,4 $cm^3$/g.

La phase active du catalyseur comprend, en outre, au moins un élément autre que le fer choisi parmi : le cobalt, l'étain, le ruthénium. Selon une version alternative de l'invention, la phase active du catalyseur comprend le potassium.

Il a été trouvé par le demandeur que la combinaison du fer dans les proportions précitées avec l'un des éléments précédents pour des teneurs poids en élément autre que le fer comprises entre 5 et 80% par rapport au poids de fer, permettait d'augmenter de façon significative l'activité du catalyseur sans diminuer de façon substantielle sa sélectivité.

Habituellement, les catalyseurs selon l'invention se présenteront sous la forme de billes, mais toute forme autre peut être envisagée (extrudés, concassés, nids d'abeilles, poudres...), obtenue par toute technique connue de l'homme du métier. Le catalyseur peut par exemple se présenter sous la forme de billes de diamètre compris entre 1 et 10 mm, de préférence entre 1 et 6 mm, ou sous la forme d'extrudés de section transversale comprise entre 0,7 et 5 mm, de préférence entre 1 et 3 mm.

Le catalyseur peut par exemple être obtenu par dépôt sur un support déjà préparé des éléments catalytiquement actifs précédemment décrits ou par leurs précurseurs.

Selon un mode de préparation possible, un support alumine peut être obtenu par préparation d'une poudre par des procédés classiques tels que la précipitation ou la formation d'un gel, ou par déshydratation rapide d'un hydroxyde d'alumine tel que l'hydrargillite. Cette dernière alumine est celle préférée selon l'invention.

Le dépôt de la phase active sur ou dans le support peut être réalisé par toute méthode connue de l'homme du métier. Il peut par exemple être réalisé par imprégnation. Le catalyseur peut ensuite être soumis à une opération de séchage et éventuellement de calcination, cette dernière opération pouvant par exemple être réalisée à une température située entre 200 et 1000°C, de préférence entre 300 et 800°C.

Le temps de contact du milieu réactionnel avec le catalyseur peut aller de 0,5 à 20 s, de préférence de 1 à 10 s, voire de 2 à 8 s, ces valeurs étant données dans les conditions normales de température et de pression (CNTP).

L'oxydation est mise en oeuvre selon l'invention avec un rapport volumique $O_2$ / composés soufrés compris entre 0,5 et 3, de préférence entre 1 et 2.

Selon un mode préféré, une quantité de vapeur d'eau comprise entre environ 1 % et 40% en volume, de préférence entre environ 5 et 35 % est introduite dans la zone de réaction.

En phase de fonctionnement, on fait passer dans un premier temps le gaz additionné d'oxygène sur le catalyseur selon l'invention à une température comprise entre environ 100 et 170°C. Dans un deuxième temps, on balaye le catalyseur chargé en soufre à l'aide d'un gaz exempt d'oxygène, à une température comprise entre 200 et 500°C pour régénérer celui-ci.

Les exemples suivants illustrent l'invention et ses avantages sans toutefois en limiter la portée.

### EXEMPLE 1 : Préparation de catalyseurs selon l'invention

Différents types de supports ont été préparés selon les règles de l'art. Les caractéristiques de ces supports sont reportés dans le tableau I.

Tableau I. Supports choisis pour l'étude

| | | Type | SBE ($m^2$/g) | VPT ($cm^3$/g) | Granulo. (mm) | $V_{100Å}$ (ml/100g) | $V_{0,1\mu m}$ (ml/100g) |
|---|---|---|---|---|---|---|---|
| | 1 | Billes d'alumine | 195 | 0,77 | 2,0-3,2 | 0,51 | 0,32 |
| | 2 | Extrudés d'alumine | 225 | 0,65 | 1,6 | 0,38 | 0,02 |
| | 3 | Extrudés de $TiO_2$ | 127 | 0,35 | 3,5 | 0,29 | 0,11 |

SBE : surface spécifique, VPT : volume poreux total, Granulo. : granulométrie

La préparation des catalyseurs a été menée à bien par imprégnation à sec des supports ainsi préparés. Les précurseurs choisis pour l'imprégnation étaient sous forme sulfate pour le fer, le nickel et le cobalt, sous forme chlorure pour le ruthénium et l'étain (voir exemple 2). Le support imprégné a été séché 4 h à 90°C, puis calciné à 350°C durant 2 h.

Le tableau II rassemble les compositions (phase active/support) des catalyseurs ainsi synthétisés.

### EXEMPLE 2 : Test catalytique

Le protocole du test catalytique réalisé se déroule en trois étapes.

Les catalyseurs synthétisés dans l'exemple 1 sont tout d'abord soumis à un pré-vieillissement de manière à les tester dans des conditions d'utilisation normales. Ce pré-vieillissement consiste en une sulfuration à 140°C par passage pendant 20 heures d'un effluent dont la composition moyenne en volume est : 1,5% de $H_2S$, 2,4% d'$O_2$, 30% de $H_2O$, 66,1% de $N_2$.

Les catalyseurs ont été ensuite soumis à une régénération à 300°C par passage pendant 6 heures d'un effluent dont la composition moyenne en volume est : 30% de $H_2O$, 70% de $N_2$, puis passage pendant 8 heures d'un autre effluent dont la composition moyenne en volume est : 2,6% de $H_2S$, 30% de $H_2O$, 67,4% de $N_2$.

Enfin, la réaction d'oxydation directe est menée à 140°C par passage d'un effluent comprenant en volume : 2500 ppm de $H_2S$, 4000 ppm de $O_2$, 30% d'$H_2O$, 69,35% de $N_2$.

Durant cette dernière étape, la conversion $\alpha$ de l'$H_2S$ et le rendement $\beta$ en $SO_2$ sont mesurés pour un temps de réaction de 8 heures et un temps de contact de 2 secondes. Les résultats des différents tests sont rassemblés dans le Tableau II.

Tableau II: Performances catalytiques des catalyseurs

| Test | Composition (% poids/support) | Support | $\alpha$ : conversion de $H_2S$ (% volume) | $\beta$ : formation de $SO_2$ (%volume) |
|---|---|---|---|---|
| 1 | 0,4% Fe | 1 | 61% | 25% |
| 2 | 1,8% Fe | 1 | 70% | 17% |
| 3 | 2,5% Fe | 1 | 79% | 1% |
| 4 | 3,6% Fe | 1 | 82% | 0% |
| 5 | 4,9% Fe | 1 | 83% | 0% |
| 6 | 7% Fe | 1 | 83% | 18% |
| 7 | 12% Fe | 1 | 84% | 25% |
| 8 | 3,8% Fe-0,8% Co | 1 | 100% | 2% |
| 9 | 3,8% Fe-1% Sn | 1 | 88% | 0% |
| 10 | 3,8% Fe-0,3% Ru | 1 | 95% | 1% |
| 11 | 2,5% Fe-2% K | 1 | 84% | 0% |
| 12 | 3,7% Fe | 2 | 85% | 1% |
| 13 | 2,4% Fe | 3 | 92% | 4% |
| 14 | 4% Ni | 1 | 81% | 21% |
| 15 | 4% Co | 1 | 84% | 36% |

Les résultats montrent les avantages substantiels liés à l'utilisation du fer comme phase active dans des proportions comprises entre 2 et 5% poids, pour une application d'oxydation directe de l'$H_2S$ à basse température :

- à faible concentration de fer (<2% poids), l'activité (conversion de l'$H_2S$) du catalyseur est faible pour une sélectivité très médiocre (formation importante de $SO_2$) ;
- à trop forte concentration de fer (>5% poids), la conversion est sensiblement constante alors que la sélectivité diminue fortement.

La comparaison des activités et sélectivité observés pour le nickel et le cobalt (tests 14 et 15) ne montre pas pour ces deux métaux un gain de même nature, dans la plage de concentration considérée (2-5 %).

La présente invention permet donc de sélectionner, de manière tout à fait inattendue une plage très particulière de la teneur en fer permettant de gagner sur les deux tableaux recherchés : activité et sélectivité. Une tel comportement n'a pas été relevé sur les autres métaux connus de l'art antérieur, dans une telle application.

Par ailleurs les tests 8 à 11 montrent également que la combinaison du fer avec un deuxième élément choisi dans la liste précédemment décrite permet d'augmenter de façon significative l'activité du catalyseur pour la réaction d'oxydation de l'hydrogène sulfuré, sans diminuer de façon substantielle sa sélectivité.

**Revendications**

1. Procédé d'oxydation directe en soufre et/ou en sulfate de composés soufrés contenus dans un gaz et comprenant du COS et/ou du CS2 jusqu'à 2% en volume dans lequel, dans un premier temps on met en contact ledit gaz en présence d'oxygène sur un catalyseur d'oxydation à une température comprise entre 100°C et 170°C, puis dans un deuxième temps on balaye ledit catalyseur chargé en soufre à l'aide d'un gaz exempt d'oxygène à une température comprise entre 200 et 500°C, dans lequel ledit catalyseur comprend un support à base de dioxyde de titane, de zircone, de silice, de silice-alumine ou d'alumine présentant une surface spécifique d'au moins 20 $m^2$/g et un volume poreux total d'au moins 0,3 $cm^3$/g, une phase active comprenant du fer dans une proportion comprise entre 2 et 5% du poids total du catalyseur d'oxydation, et comprenant en outre au moins un élément autre que le fer choisi parmi: le cobalt, l'étain, le ruthénium, ou, selon une version alternative, le potassium, pour des teneurs en poids en élément autre que le fer comprises entre 5 et 80 % par rapport au poids de fer.

2. Procédé selon la revendication 1 dans lequel lesdits composés soufrés comprennent en outre jusqu'à 5% en volume d'hydrogène sulfuré $H_2S$.

3. Procédé selon l'une des revendications précédentes dans lequel le rapport oxygène / composés soufrés est compris entre 0,5 et 3.

4. Procédé selon l'une des revendications précédentes dans lequel on introduit dans la zone de contact une quantité de vapeur d'eau comprise entre 1% et 40% en volume.

5. Procédé selon l'une des revendications précédentes dans lequel le temps de contact du milieu réactionnel avec le catalyseur est compris entre de 0,5 et 20 secondes dans les conditions normales de température et de pression (CNTP).

6. Procédé selon l'une des revendications précédentes dans lequel le support est une alumine, ou de la silice, ou une silice-alumine.

7. Procédé selon la revendication 6 dans lequel le volume poreux total du support est d'au moins 0,4 $cm^3$/g.

8. Procédé selon la revendication 6 dans lequel la surface spécifique du support est d'au moins 40 m2/g.

**Patentansprüche**

1. Verfahren zur Direktoxidation schwefliger Verbindungen zu Schwefel und/oder Sulfat, die in einem Gas enthalten sind und bis zu 2 Vol.% COS und/oder CS2 umfassen, wobei zu einem ersten Zeitpunkt das Gas in Gegenwart von Sauerstoff mit einem Oxidationskatalysator bei einer Temperatur zwischen 100 °C und 170 °C in Kontakt gebracht wird, daraufhin zu einem zweiten Zeitpunkt der mit Schwefel beladene Katalysator mit Hilfe eines Gases außer Sauerstoff bei einer Temperatur zwischen 200 und 500 °C entfernt wird, wobei der Katalysator einen Träger auf Basis von Titandioxid, Zirkonium, Kieselsäure, Kieselsäure-Tonerde oder Tonerde umfasst, der eine spezifische Oberfläche von wenigstens 20 m$^2$/g und ein Gesamtporenvolumen von wenigstens 0,3 cm$^3$/g aufweist, eine aktive Phase, die Eisen in einem Verhältnis zwischen 2 und 5 % des Gesamtgewichts des Oxidationskatalysators umfasst und ferner umfassend wenigstens ein anderes Element als Eisen ausgewählt aus: Kobalt, Zinn, Ruthenium oder, gemäß einer alternativen Ausführungsform Kalium, wobei der Gewichtsgehalt des anderen Elements als Eisen zwischen 5 und 80 % in Bezug auf das Gewicht von Eisen beträgt.

**2.** Verfahren nach Anspruch 1, wobei die schwefligen Verbindungen ferner bis zu 5 Vol.% Schwefelwasserstoff H$_2$S umfassen.

**3.** Verfahren nach einem der vorherigen Ansprüche, wobei das Verhältnis Sauerstoff/schweflige Verbindungen zwischen 0,5 und 3 beträgt.

**4.** Verfahren nach einem der vorherigen Ansprüche, wobei in die Kontaktzone eine Menge von Wasserdampf zwischen 1 Vol.% und 40 Vol.% eingeführt wird.

**5.** Verfahren nach einem der vorherigen Ansprüche, wobei die Kontaktzeit des reaktiven Mediums mit dem Katalysator zwischen 0,5 und 20 Sekunden beträgt unter normalen Temperatur- und Druckbedingungen (NTDB).

**6.** Verfahren nach einem der vorherigen Ansprüche, wobei der Träger Tonerde oder Kieselsäure oder Kieselsäure-Tonerde ist.

**7.** Verfahren nach Anspruch 6, wobei das Gesamtporenvolumen des Trägers wenigstens 0,4 cm$^3$/g ist.

**8.** Verfahren nach Anspruch 6, wobei die spezifische Oberfläche des Trägers wenigstens 40 m$^2$/g ist.


**Claims**

**1.** Process for direct oxidation into sulfur and/or into sulfate of sulfur-containing compounds that are contained in a gas and that comprise COS and/or CS2 up to 2% by volume, in which in a first step said gas is brought into contact at a temperature between 100 and 170°C and in the presence of oxygen with an oxidation catalyst, then in a second step said catalyst loaded with sulfur is flushed with an oxygen-free gas at a temperature of between 200 and 500°C, wherein said catalyst comprises a substrate based on titanium dioxide, zirconia, silica, silica-alumina or alumina having a specific surface area of at least 20 m$^2$/g and a total pore volume of at least 0.3 cm$^3$/g, an active phase comprising iron in a proportion of between 2 and 5% of the total weight of the oxidation catalyst and at least one element other than iron that is selected from among cobalt, tin, ruthenium or, according to an alternative, potassium, and wherein weight contents of elements other than iron is between 1 and 80% relative to the weight of iron.

**2.** Process according to claim 1, in which said sulfur-containing compounds also comprise up to 5% by volume of hydrogen sulfide H$_2$S.

**3.** Process according to one of the preceding claims, in which the oxygen/sulfur-containing compounds ratio is between 0.5 and 3.

**4.** Process according to one of the preceding claims, in which an amount of water vapor of between 1% and 40% by volume is introduced into the contact zone.

**5.** Process according to one of the preceding claims, in which the contact time of the reaction medium with the catalyst is between 0.5 and 20 seconds under normal conditions of temperature and pressure (CNTP).

**6.** Process according to one of the preceding claims, in which the substrate is an alumina, a silica or a silica-alumina.

**7.** Process according to claim 6, in which the total pore volume of the substrate is of at least 0.4 cm$^3$/g.

**8.** Process according to claim 6, in which the specific surface area of at least 40 m$^2$/g.

**EP 1 495 795 B1**

## RÉFÉRENCES CITÉES DANS LA DESCRIPTION

### Documents brevets cités dans la description

- FR 2538716
- WO 9421555 A
- EP 0324091 A